# EUROPÄISCHE PATENTSCHRIFT

(11) **EP 0 854 672 B1**
(45) Veröffentlichungstag und Bekanntmachung des Hinweises auf die Patenterteilung: **25.08.1999**
(21) Anmeldenummer: 96934623.8
(22) Anmeldetag: 10.10.1996
(51) Int. Cl.: A01D 34/64

(54) **AUFSITZRASENMÄHER**
RIDE-ON LAWNMOWER
TONDEUSE A GAZON AUTOPORTEE

(30) Priorität: 13.10.1995 DE 19538230
(43) Veröffentlichungstag der Anmeldung: 29.07.1998
(73) Patentinhaber: Wolfgeräte GmbH Vertriebsgesellschaft KG, 57518 Betzdorf (DE)
(72) Erfinder: WOLF, Gregor, D-57517 Betzdorf (DE)
(74) Vertreter: Koch, Günther, Dipl.-Ing.
(86) Internationale Anmeldenummer: EP9604410
(87) Internationale Veröffentlichungsnummer: WO9713400

(56) Entgegenhaltungen:
- EP-A- 0 678 235
- DE-U- 29 521 119
- FR-A- 1 228 919
- US-A- 2 551 817
- US-A- 3 839 919
- US-A- 4 807 904
- US-A- 5 433 066
- PATENT ABSTRACTS OF JAPAN vol. 95, no. 004 & JP,A,07 087823 (KUBOTA CORP), 4.April 1995,

## Beschreibung

Die Erfindung bezieht sich auf einen Aufsitzrasenmäher mit einem Antriebsmotor für die Schneidmesser und den Fahrantrieb.

Derartige Aufsitzrasenmäher weisen einen Fahrersitz sowie eine vom Fahrer betätigbare Lenkvorrichtung auf und sämtliche Steuer- und Einstellbewegungen können durch die Person vom Fahrersitz aus vorgenommen werden, wodurch der höchstmögliche Bedienungskomfort erzielt wird, was insbesondere beim Mähen größerer Rasenflächen ins Gewicht fällt. Dieser Komfort muß jedoch bei den bisher bekannten Aufsitzrasenmähern mit einem relativ hohen Preis erkauft werden, so daß diese Kategorie von Mähern bisher fast ausschließlich gewerblichen Betrieben vorbehalten war. Die hohen Kosten bekannter Aufsitzmäher sind im wesentlichen dadurch bedingt, daß diese allgemein in Form eines Kleintraktors konzipiert werden, was teure Fahrgestellaufbauten und Getriebeanordnungen bedingt. Häufig fanden diese als Kleintraktor ausgebildeten Aufsitzrasenmäher auch noch für andere Zwecke Verwendung, z.B. als Schlepper oder Schneefräse, wenn sie mit entsprechenden Zusatzeinrichtungen ausgerüstet waren.

Ein derartiger Aufsitzrasenmäher in Form eines Kleintraktors ist beispielsweise aus der US-PS 4 807 904 bekannt, wobei das eigene Stützräder aufweisende Mähwerk bei diesem Rasenmäher vor den Vorderrädern angeordnet ist, während im hinteren Bereich des Rasenmähers, d.h. hinter dem Sitz und der Motoranordnung, eine Ladeplattform zur Aufnahme von austauschbarem Zubehör oder anderen Gegenständen vorgesehen ist.

Aus der US-PS 3 839 919 ist ein Aufsitzrasenmäher bekannt, der eine über die Breite der Vorrichtung durchgehende Beinfreiheit aufweist, wobei in diesem Fall der Antriebsmotor im wesentlichen über der Hinterachse angeordnet ist, und die Kraftübertragung zu dem zwischen der Vorder- und Hinterachse angeordneten Mähwerk über einen Antriebsriemen erfolgt. Die Kraftschlüssigkeit wird dabei dadurch erzeugt, daß das Mähwerk in eine vordere Stellung gebracht wird, wodurch der Antriebsriemen gestrafft wird.

Weiterhin ist aus der EP 0 678 235 A1 ein Aufsitzrasenmäher bekannt, der ebenfalls eine über die Breite der Vorrichtung durchgehende Beinfreiheit aufweist, wobei das Fahrgestell in diesem Fall von vorn nach hinten ansteigt, damit alle wesentlichen Komponenten kompakt unterhalb des Rahmens angeordnet werden können. Der Antriebsmotor ist bei diesem Aufsitzrasenmäher unterhalb des Sitzes zwischen der Hinterachse und der Messerwelle des zwischen den Achsen gelegenen Mähwerkes angeordnet, wobei die Kraftübertragung vom Antriebsmotor zur Messerwelle auch in diesem Fall über einen Riemen erfolgt.

Den vorstehend erwähnten Aufsitzrasenmähern ist somit gemeinsam, daß sie zur Erzielung einer durchgehenden Beinfreiheit einen relativ aufwendigen Aufbau aufweisen, was hohe Herstellungskosten mit sich bringt.

Der Erfindung liegt demgegenüber die Aufgabe zugrunde, einen durch einfachen Aufbau preisgünstig herstellbaren Aufsitzrasenmäher zu schaffen, der auch vom privaten Gartenbesitzer einsetzbar ist.

Ausgehend von einem Aufsitzrasenmäher, wie er in der EP 0 678 235 A1 beschrieben ist, d.h. einem Aufsitzrasenmäher, mit einem Antriebsmotor für die Schneidmesser und den Fahrantrieb, mit einer Motorabtriebswelle, mit einer Messerwelle, mit einem Sitz, unter dem der Antriebsmotor angeordnet ist, mit einem Fahrgestell, das zwei vom Antriebsmotor angetriebene Hinterräder und zwei lenkbare Vorderräder aufweist, zwischen denen der Mähstreifen zu liegen kommt, und mit einem Rahmenaufbau, dessen Vorderteil mit einem Lenkgehäuse verbunden ist, in dem eine in dieses eintauchende Lenksäule gelagert ist, wird die vorstehend genannte Aufgabe erfindungsgemäß dadurch gelöst, daß der Sitz in Form eines Sattels ausgebildet ist, wobei die Beine des Fahrers zwischen sich Antriebselemente einschließen, daß der Rahmenaufbau ein zentraler Rahmenaufbau ist, an dem das Fahrgestell, eine Lenkeinrichtung und der Antrieb aufgehängt sind, wobei der Sattel an dem Rahmenaufbau abgestützt ist, daß die Längsachsen der Motorabtriebswelle und die Messerwelle axial ausgerichtet und vertikal angeordnet sind, daß die Motorabtriebswelle und die Messerwelle über eine erste Kupplungseinrichtung und ein torsionselastisches Dämpfungsglied verbindbar sind, daß das torsionselastische Dämpfungsglied zwischen der ersten Kupplungseinrichtung und der Messerwelle angeordnet ist, wobei das Abtriebsglied der ersten Kupplungseinrichtung im äußeren Umfangsbereich des Dämpfungsgliedes eingreift, während die Messerwelle im Innenbereich des Dämpfungsgliedes derart eingreift, daß sowohl messerseitige als auch motorseitige Kraftstöße bzw. Impulse elastisch ausgeglichen werden, daß die beiden Hinterräder über eine zweite Kupplungseinrichtung, ein Getriebe und/oder eine Riemen- bzw. Kettenanordnung mit der Motorabtriebswelle verbindbar sind, und daß die Lenksäule mit einer Lenkstange verbunden ist, die Bedienelemente trägt.

Vorzugsweise ist eine Schnitthöhenverstellung vorgesehen, die durch die axiale Verschiebbarkeit der Messerwelle gegenüber der Motorabtriebswelle gebildet ist, wobei die Messerwelle ein Ritzel trägt, das mit einem innenverzahnten Hohlzylinder in Eingriff steht, der mit dem torsionselastischen Dämpfungsglied verbunden ist.

Die zweite Kupplungseinrichtung kann durch einen Riemen, der über eine erste an der Motorabtriebswelle befestigte Riemenscheibe und eine zweite an einer mit dem Getriebe in Verbindung und parallel zur Motorabtriebswelle angeordneten Welle befestigte Riemenscheibe läuft, gebildet sein, wobei die kraftschlüssige Verbindung der beiden Riemenscheiben durch die Betätigung eines Elementes erzeugt wird, über das der Riemen gespannt wird, während dieser über die erste Riemenscheibe rutscht, wenn das Element nicht betätigt ist.

Auf beiden Seiten des Aufbaus können Fußrasten oder Fußplatten vorgesehen sein, die zumindest mit dem Element kombiniert sind, über das der Riemen gespannt wird.

Weiterhin kann der Rahmenaufbau und/oder der Antriebsmotor des Aufsitzrasenmähers durch eine Karosserie verkleidet sein.

Auch der Vorderteil mit der Lenkanordnung kann eine Verkleidung mit einem dem Fahrer zugewandten Armaturenbrett tragen.

Der Sattel kann als Sitz mit oder ohne Lehne ausgebildet sein.

Der Sattel kann um eine Achse, vorzugsweise die vordere Querachse, nach oben aufklappbar sein.

Der Rahmenaufbau des Aufsitzrasenmähers weist vorzugsweise zwei abgeknickte Profilträgerpaare auf, die im geringen Abstand zueinander benachbart zur Längsachse angeordnet und miteinander und mit Versteifungsmitteln verschweißt sind.

In diesem Fall kann im hinteren Abschnitt der abgeknickten Profilträgerpaare ein quer verlaufender, vertikal stehender Bügel angeschweißt sein, oder es kann ein Heckrahmen mit den Profilträgerpaaren verschweißt sein. Im zuerst genannten Fall kann an den geknickten Profilträgerpaaren ein horizontaler U-Rahmen angeschweißt sein.

Die Profilträgerpaare sind vorzugsweise im Vorderteil mit dem Lenkgehäuse verbunden.

Aus dem Vorstehenden ergibt sich, daß der Erfindung die Erkenntnis zugrundeliegt, daß man zu einem preisgünstigen und vollwertigen Aufsitzrasenmäher gelangen kann, wenn man nicht wie bisher von einem Kleintraktor ausgeht, sondern von einem herkömmlich radgetriebenen Rasenmäher, der nur relativ wenige zusätzliche Konstruktionselemente benötigt, um als Aufsitzrasenmäher den Mähvorgang durchführen zu können. Die Einfachheit des Aufbaus beruht im wesentlich darauf, daß anstelle der den Traktoren nachgebildeten Sitzbank oder dem Stuhlsitz ein sattelartiger Fahrersitz vorgesehen ist. Hierdurch kann die Bauhöhe beträchtlich verringert werden, denn der Fahrersattel kann unmittelbar auf dem zentralen Rahmenaufbau aufklappbar angeordnet werden.

Der erfindungsgemäße Aufsitzrasenmäher ist vom Aufbau her einem Motorrad ähnlich, bei dem ebenfalls der Motor unter dem Sattelbereich angeordnet ist, und der Trägerrahmen zentral verläuft. Dies war bei den bisher bekannten Aufsitzmähern nicht möglich, bei denen ein über die Breite durchgehender Sitz mit Beinfreiheit gefordert wurde, so daß der Rahmenaufbau unter der ebenfalls durchgehenden Fußablage angeordnet werden mußte.

Für den erfindungsgemäßen Aufsitzrasenmäher kommt als Antriebsmaschine vorzugsweise eine Brennkraftmaschine in Betracht; in Anbetracht des leichten Aufbaus des Rasenmähers ist es jedoch auch denkbar, als Antriebsmotor einen Elektromotor vorzusehen, der aus einer aufladbaren Batterie gespeist wird. Obwohl die Erfindung einen Aufsitzrasenmäher betrifft, ist es jedoch ebenfalls denkbar einen derartigen "Motorradaufbau" auch für Vertikutierer oder andere Gartengeräte zu verwenden.

Nachstehend werden Ausführungsbeispiele der Erfindung anhand der Zeichnungen beschrieben. In der Zeichnung zeigen:
- Fig. 1: zeigt in einer schematischen Seitenansicht einen erfindungsgemäß ausgebildeten Aufsitzrasenmäher;
- Fig. 2: zeigt eine Seitenansicht eines hinsichtlich des Rahmens abgewandelten Aufsitzrasenmäher;
- Fig. 3 bis 5: zeigen perspektivische Darstellungen des Rahmenaufbaus des Aufsitzrasenmähers gemäß Fig. 1;
- Fig. 6 und 7: zeigen perspektivische Darstellungen des Rahmenaufbaus des Aufsitzrasenmähers gemäß Fig. 2;
- Fig. 8 und 9: zeigen zwei schematische Draufsichten des Rahmenaufbaus eines erfindungsgemäß ausgebildeten Aufsitzrasenmähers;
- Fig. 10: zeigt eine schematische Seitenansicht einer weiteren Ausführungsform des erfindungsgemäßen Aufsitzrasenmähers;
- Fig. 11: zeigt eine schematische, teilweise geschnittene Draufsicht des Aufsitzrasenmähers nach Fig. 10; und
- Fig. 12: zeigt eine Ausführungsform des Verbindungsbereiches zwischen Antriebsmotor und Schneidmesser.

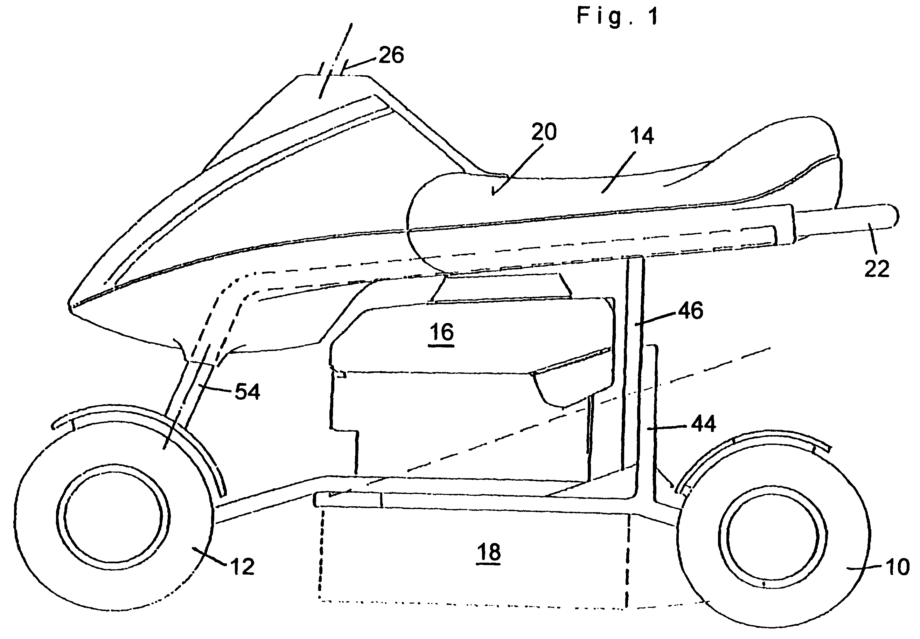

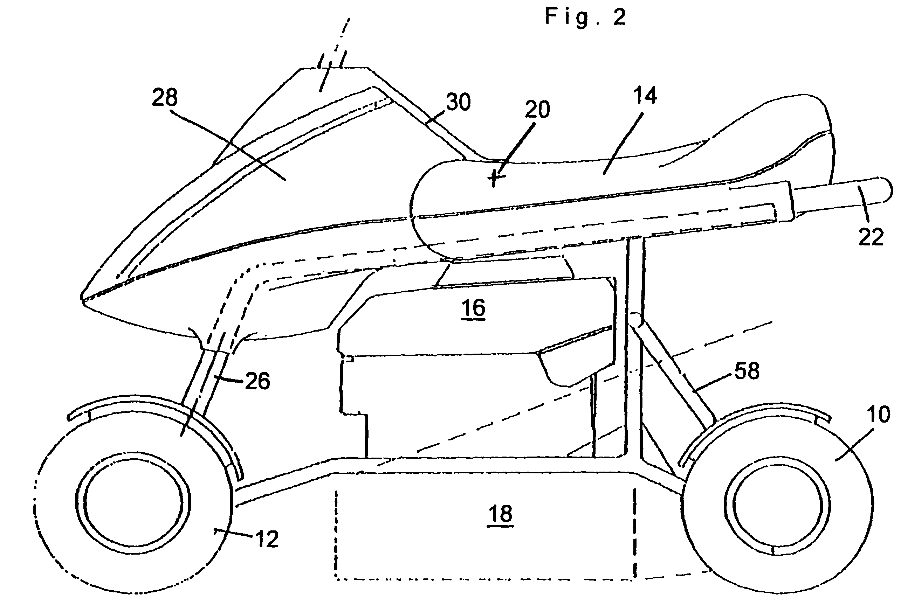

Bei allen Ausführungsformen ist als tragendes Element ein Rahmenaufbau vorgesehen, wobei dieser für die Ausführungsbeispiele gemäß Fig. 1 und 2 weiter unten im einzelnen beschrieben wird. Von diesem Rahmenaufbau wird ein in der Zeichnung nicht dargestelltes, flaches Chassis getragen, von welchem die Hinterräder 10 und die Vorderräder 12 seitlich vorstehen. Der Gesamtaufbau ist bei allen Ausführungsbeispielen insofern gleich, als sie nach Art eines Motorrades ausgebildet sind, bei dem der Fahrer auf einem vom zentralen Rahmen getragenen Sattel 14 sitzt, von dem die Beine auf beiden Seiten gebeugt angeordnet und und von Fußrasten getragen werden. Die Beine schließen dann zwischen sich den Antriebsmotor 16 ein, der vorzugsweise als Brennkraftmotor ausgebildet ist, aber auch ein von Batterien gespeister Elektromotor sein kann. Der mit vertikaler Welle arbeitende Motor treibt ein nicht dargestelltes Sichelmesser an, welches innerhalb einer Schutzumkleidung 18 umläuft. Der Sattel 14 ist vorzugsweise um eine vordere, quer verlaufende Achse 20 anhebbar, um die Bedienungselemente des Motors leichter zugänglich zu machen. Zu diesem Zweck des Aufklappens ist bei den Ausführungsformen nach Fig. 1 und 2 ein Handgriffbügel 22 vorgesehen.

Die Vorderräder 12 werden über eine Lenksäule 26 angestellt, die mit einer Verkleidung 28 umgeben ist, die im hinteren Teil, dem Fahrer zugewandt, ein Armaturenbrett 30 tragen kann. Auf diesem können Anzeigegeräte angeordnet sein. Es kann ein (nicht gezeigter) Gangschalthebel vorgesehen sein, der beispielsweise auf dem Armaturenbrett 30 vorstehen kann.

Als Steuerelement ist auf der Lenksäule 26 ein Lenkstange 106 aufgesetzt, wie dies bei Motorrädern und Fahrrädern üblich ist, wobei benachbart zu den Handgriffen Bedienungshebel, beispielsweise für Kupplung, Bremse oder Schaltung angeordnet sein können.

Der "Motorradaufbau" ermöglicht kleine Abmessungen sowohl in der Höhe als auch in der Breite, so daß der Raumbedarf und das Gewicht des Aufsitzrasenmähers nicht wesentlich höher liegen, als bei einem gewöhnlichen radgetriebenen, mit Hand geführten Mäher.

Obwohl dies nicht gezeigt ist, kann bei sämtlichen Ausführungsformen ein Fangbehälter für das geschnittene Gras vorgesehen sein, der vorzugsweise im hinteren Bereich des Aufsitzrasenmähers angeordnet ist, bzw. dort lösbar befestigt werden kann.

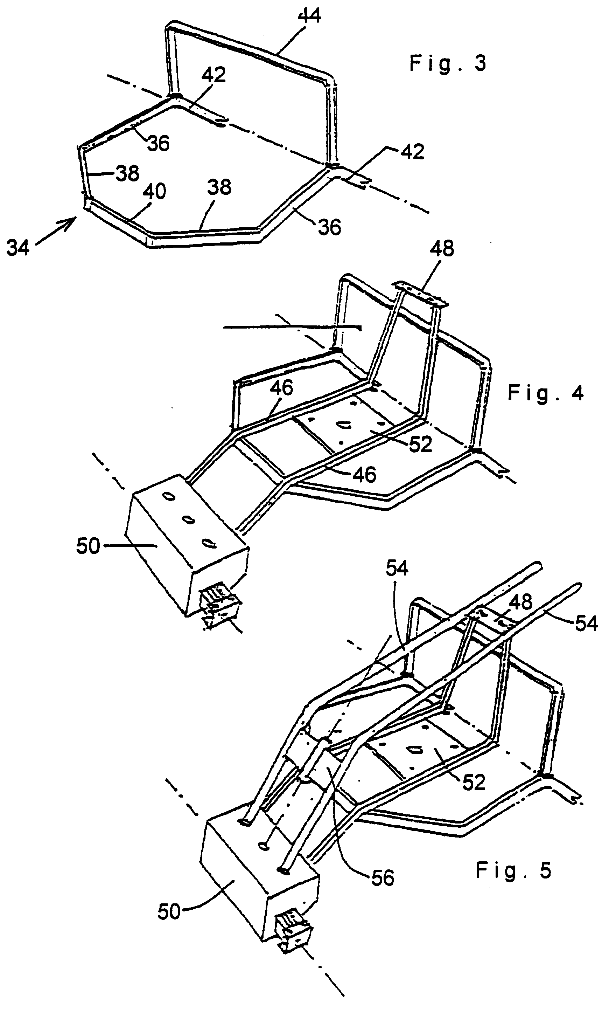

Der Rahmenaufbau ist bei sämtlichen Ausführungsbeispielen ähnlich. Er ist dadurch gekennzeichnet, daß benachbart zur Längsachse Rahmenelemente angeordnet sind, die zwischen den Beinen zu liegen kommen und die den Sattel tragen. Ein insbesondere für den Aufsitzmäher nach Fig. 1 geeigneter Rahmenaufbau geht aus den Fig. 3 bis 5 hervor.

Dieser Rahmenaufbau weist einen horizontal liegenden U-Rahmen 34 auf, dessen Seitenschenkel 36 über zwei konvergierende Abschnitte 38 und einen quer verlaufenden Mittelabschnitt 40 verbunden sind. Die Enden der Schenkel 36 sind mit einer Abwinkelung 42 versehen, die als Hinterachslager dienen können. Der U-Rahmen 34 ist an seinen Abwinkelungsstellen mit den Schenkelenden eines vertikalen Bügels 44 verschweißt (Fig. 3).

An diesen Rahmenaufbau gemäß Fig. 3 sind, wie aus Fig. 4 ersichtlich, zwei nebeneinander, benachbart zur Mittelachse liegende, abgeknickte Profilträger 46 eingeschweißt. Im hinteren Abschnitt verlaufen diese Träger in Vertikalrichtung, und sie sind oben durch eine Lasche 48 verbunden. Im vorderen Abschnitt sind die Profilträger 46 mit einem Lenkgehäuse 50 verbunden. Zwischen den Trägern 46 ist eine Platte 52 eingeschweißt, an der der Motor aufgehängt sein kann.

Vervollständigt wird der Rahmenaufbau, wie aus Fig. 5 ersichtlich, durch zwei weitere abgeknickte Profilträger 54, die, ebenso wie die anderen Rahmenteile, als Rohre ausgebildet sein können und am Lenkgehäuse 50 ansetzen und über eine Knickstelle schräg nach oben verlaufen und an der Lasche 48 bzw. den Profilträgern 46 im Bereich der Lasche angeschweißt sind. Im vorderen Abschnitt ist zwischen die Profilträger 54 eine Platte 56 mit einer Hülse eingeschweißt, die die Lenksäule 26 führt.

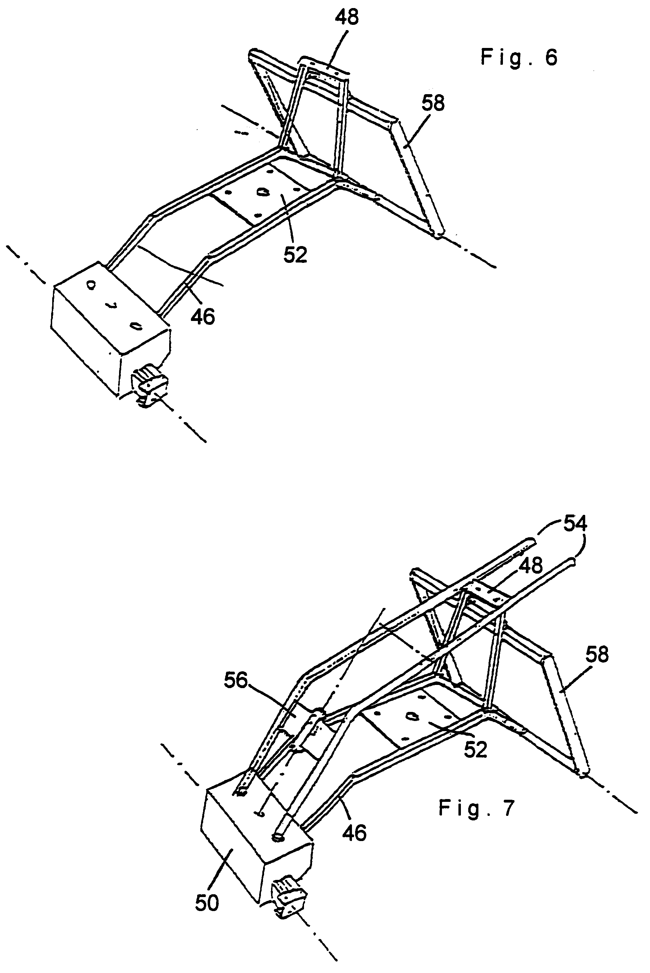

Der Antriebsmotor 16 treibt bei allen Ausführungsbeispielen über ein entsprechendes Getriebe 104 und eine Kupplung die Hinterräder 10 an. Der Rahmenaufbau gemäß Fig. 6 und 7, der insbesondere für den Aufsitzrasenmäher nach Fig. 2 bestimmt ist, entspricht in seinen wesentlichen Teilen dem Rahmenaufbau nach Fig. 3 bis 5.

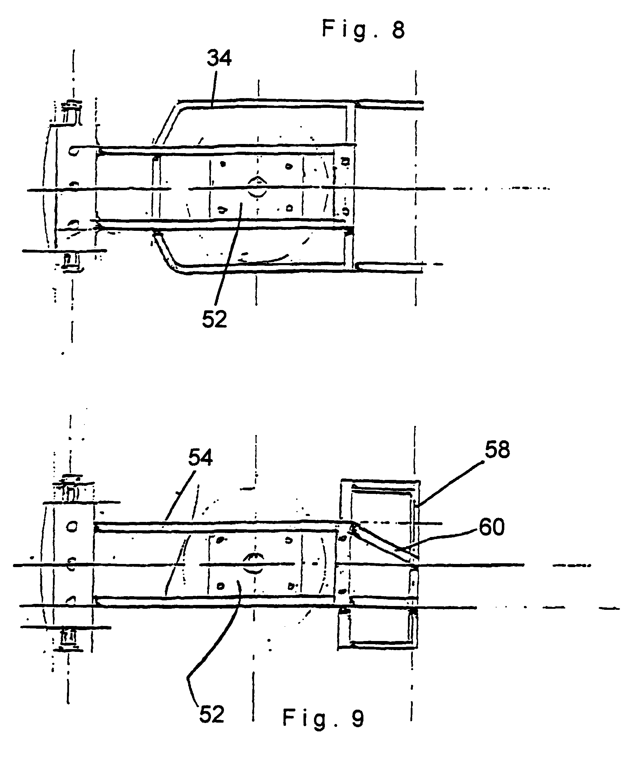

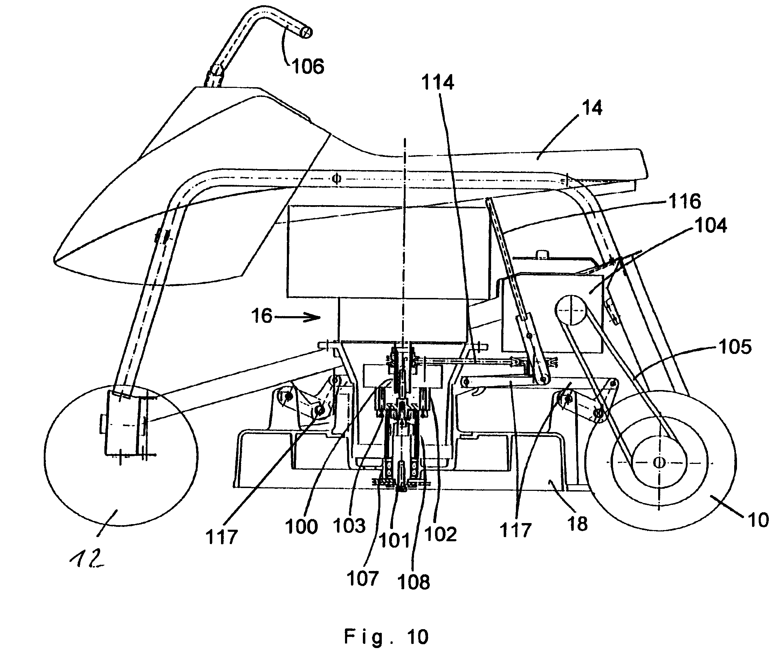

Abweichend von diesem Ausführungsbeispiel ist anstelle des Bügels 44 ein rechteckiger Heckrahmen 58 vorgesehen, der eine Fangkorbbefestigung und ein Achslager aufweist. Bei diesem Ausführungsbeispiel fällt der in Fig. 3 bis 5 dargestellte U-Rahmen 34 weg, wodurch sich ein noch schmalerer Aufbau ergibt. Dies wird aus den Fig. 8 und 9 deutlich. Fig. 8 zeigt eine Draufsicht auf einen Rahmenaufbau gemäß Fig. 3 bis 5, während Fig. 9 einen Rahmenaufbau gemäß dem Ausführungsbeispiel nach Fig. 6 und 7 darstellt. Die Fig. 9 läßt noch eine am Heckauswurf, d.h. am Heckrahmen 58, angeordnete Leitfläche 60 erkennen, über die das Gras in optimaler Weise in den Fangkorb befördert werden kann.

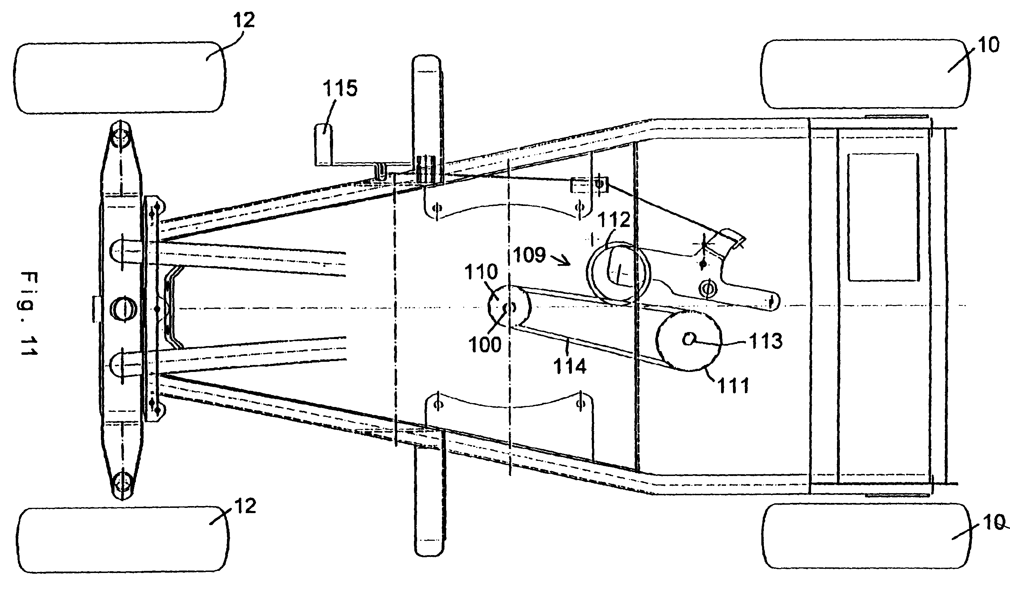

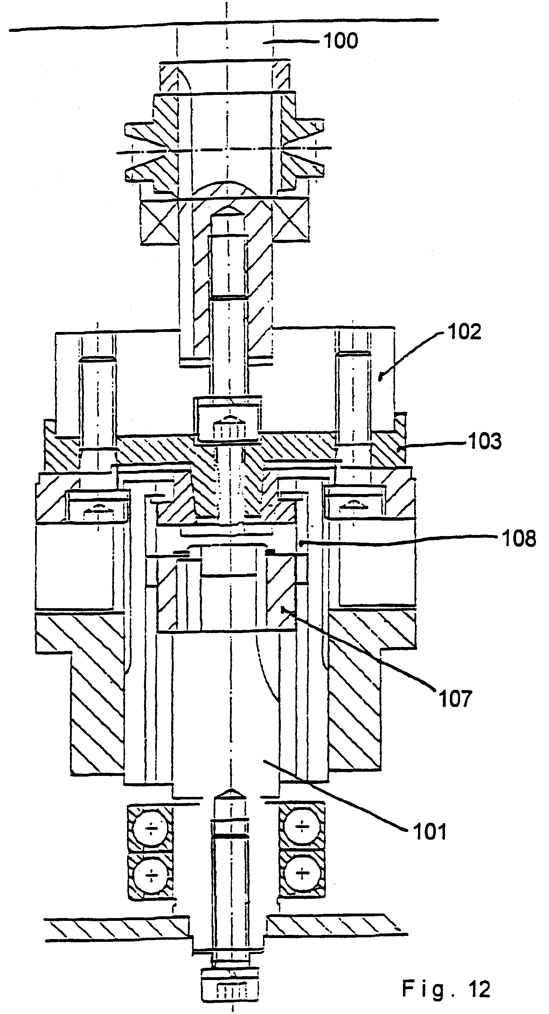

Die Fig. 10 und 11 zeigen eine weitere Ausführungsform des Aufsitzrasenmähers, wobei in diesen Figuren insbesondere der Fahrantrieb und der Antrieb für die Schneidmesser (Fig.12) ausführlicher dargestellt sind.

Unterhalb des Sattels 14 ist der nur schematisch gezeigte Antriebsmotor 16 angeordnet. Aus dem Antriebsmotor 16 steht nach unten eine vertikal angeordnete Motorabtriebswelle 100 vor, über die sowohl die Hinterräder 10 als auch Messerwelle 101 und somit die Schneidmesser angetrieben werden.

Zwischen dem Antriebsmotor 16 und der Messerwelle 101 ist eine erste Kupplungseinrichtung 102 angeordnet, um die Messerwelle 101 mit der Motorabtriebswelle 100 zu verbinden.

Es hat sich gezeigt, daß sowohl der Antriebsmotor 16 als auch die Schneidmesser aufgrund von motorseitigen als auch messerseitigen Kraftstößen, beispielsweise aufgrund von Bodenunebenheiten oder Steinen, beschädigt werden können. Aus diesem Grund ist zwischen der ersten Kupplungseinrichtung 102 und der Messerwelle 101 ein torsionselastisches Dämpfungsglied 103 vorgesehen. Dieses Dämpfungsglied 103 ist scheibenförmig ausgebildet und erstreckt sich parallel zur Arbeitsebene, wobei das Abtriebsglied der ersten Kupplungseinrichtung 102 im äußeren Umfangsbereich des Dämpfungsgliedes 103 eingreift, während die Messerwelle 101 im Mittelbereich des Dämpfungsgliedes eingreift. Durch das scheibenförmige, torsionselastische Dämpfungsglied 103 können sowohl messerseitige als auch motorseitige Kraftstöße oder Impulse elastisch ausgeglichen werden, wodurch eine Beschädigung des Antriebsmotors 16 oder der Schneidmesser weitgehend ausgeschlossen ist.

Die gewünschte Schnitthöhe wird über einen Hebel 116 eingestellt, indem die Abdeckung 18 gemeinsam mit den Schnittmessern über eine Gestängeanordnung 117 angehoben oder gesenkt wird. Um diese Schnitthöheneinstellung zu ermöglichen, ist die Messerwelle 101 zweiteilig ausgebildet. Ein oberer Teil ist durch einen innenverzahnten Hohlzylinder 108 gebildet, der mit dem Dämpfungsglied 103 verbunden ist. In diesem Kohlzylinder ist ein weiterer Teil der Messerwelle teleskopartig eingeführt, der ein Ritzel 107 trägt, das in die Innenverzahnung des Hohlzylinders 108 eingreift. Wenn die Schneidmesser zusammen mit der Abdeckung 18 angehoben oder gesenkt werden, wird der das Ritzel 107 tragende Teil der Messerwelle axial in dem innenverzahnten Hohlzylinder 108 verschoben, wobei die bezüglich der Wellenrotation formschlüssige Verbindung erhalten bleibt. Wie dies in Fig. 10 deutlich gezeigt ist, ist die vertikale Motorabtriebswelle 100 mit der Messerwelle 101 axial ausgerichtet.

Nachfolgend wird die Kraftübertragung auf die Antriebsräder 10 ausführlicher erläutert. Direkt auf der Motorabtriebswelle 100, d.h. oberhalb von der ersten Kupplungseinrichtung 102, ist eine erste Riemenscheibe 110 angeordnet. Im hinteren Bereich des Aufsitzrasenmähers ist ein Schaltgetriebe 104 angeordnet, aus dem nach unten eine im wesentlichen vertikal angeordnete Welle 113 vorsteht. Auf der Welle 113 ist eine zweite Riemenscheibe 111 angeordnet. Ein Antriebsriemen 114 überträgt die Kraft von der Riemenscheibe 110 auf die Riemenscheibe 111 und damit das Getriebe 104, wenn die Riemenspannung erhöht wird. Um die Riemenspannung zu erhöhen und damit den Aufsitzrasenmäher in Bewegung zu versetzen, betätigt der Fahrer ein Element, das beispielsweise in Form eines Pedals 115 gebildet sein kann, wodurch eine weitere Riemenscheibe 112 derart gegen den Riemen 114 gedrückt wird, daß sich die Riemenspannung ausreichend erhöht, um die Kraftübertragung zu ermöglichen. Im nicht betätigten Zustand des Elementes 115 rutscht der Riemen 114 über die Riemenscheibe 110. Die soeben beschriebene Anordnung bildet eine zweite Kupplungseinrichtung 109, über die die Antriebsräder 10 mit der Motorabtriebswelle 100 verbunden werden können. Die Kraftübertragung vom Getriebe 104 zu den Antriebsrädern 10 erfolgt über wenigstens einen weiteren Riemen 105.

### Bezugszeichenliste

- 10: Hinterräder
- 12: Vorderräder
- 14: Sattel
- 16: Antriebsmotor
- 18: Schutzumkleidung
- 20: Achse
- 22: Handgriffbügel
- 26: Lenksäule
- 28: Verkleidung
- 30: Armaturenbrett
- 34: U-Rahmen
- 36: Seitenschenkel
- 38: Abschnitte
- 40: Mittelabschnitt
- 42: Abwinkelung
- 44: Bügel
- 46: Profilträger
- 48: Lasche
- 50: Lenkgehäuse
- 52: Platte
- 54: Profilträger
- 56: Platte
- 58: Heckrahmen
- 60: Leitfläche
- 100: Motorabtriebswelle
- 101: Messerwelle
- 102: erste Kupplungseinrichtung
- 103: torsionselastisches Dämpfungsglied
- 104: Schaltgetriebe
- 105: Riemen
- 106: Lenkstange
- 107: Ritzel
- 108: Hohlzylinder
- 109: zweite Kupplungseinrichtung
- 110: Riemenscheibe
- 111: Riemenscheibe
- 112: Riemenscheibe
- 113: Welle
- 114: Antriebsriemen
- 115: Pedal
- 116: Hebel
- 117: Gestängeanordnung

## Patentansprüche

1. Aufsitzrasenmäher mit einem Antriebsmotor (16) für die Schneidmesser und den Fahrantrieb, mit einer Motorabtriebswelle (100), mit einer Messerwelle (101), mit einem Sitz (14), unter dem der Antriebsmotor (16) angeordnet ist, mit einem Fahrgestell, das zwei vom Antriebsmotor (16) angetriebene Hinterräder (10) und zwei lenkbare Vorderräder (12) aufweist, zwischen denen der Mähstreifen zu liegen kommt, und mit einem Rahmenaufbau, dessen Vorderteil mit einem Lenkgehäuse (50) verbunden ist, in dem eine in dieses eintauchende Lenksäule gelagert ist,
dadurch gekennzeichnet, daß der Sitz in Form eines Sattels (14) ausgebildet ist, wobei die Beine des Fahrers zwischen sich Antriebselemente einschließen, daß der Rahmenaufbau ein zentraler Rahmenaufbau ist, an dem das Fahrgestell, eine Lenkeinrichtung und der Antrieb (16) aufgehängt sind, wobei der Sattel (14) an dem Rabmenaufbau abgestützt ist, daß die Längsachsen der Motorabtriebswelle (100) und die Messerwelle (101) axial ausgerichtet und vertikal angeordnet sind, daß die Motorabtriebswelle (100) und die Messerwelle über eine erste Kupplungseinrichtung (102) und ein torsionselastisches Dämpfungsglied verbindbar sind, daß das torsionselastische Dämpfungsglied zwischen der ersten Kupplungseinrichtung (102) und der Messerwelle (101) angeordnet ist, wobei das Abtriebsglied der ersten Kupplungseinrichtung (102) im äußeren Umfangsbereich des Dämpfungsgliedes eingreift, während die Messerwelle im Innenbereich des Dämpfungsgliedes derart eingreift, daß sowohl messerseitige als auch motorseitige Kraftstöße bzw. Impulse elastisch ausgeglichen werden, daß die beiden Hinterräder (10) über eine zweite Kupplungseinrichtung (109), ein Getriebe (104) und/oder eine Riemen- bzw. Kettenanordnung (105) mit der Motorabtriebswelle (100) verbindbar sind, und daß die Lenksäule mit einer Lenkstange (106) verbunden ist, die Bedienelemente trägt.

2. Aufsitzrasenmäher nach Anspruch 1,
dadurch gekennzeichnet, daß die Messerwelle eine Schnitthöhenverstellung einschließt, die durch die axiale Verschiebbarkeit der Messerwelle (101) gegenüber der Motorabtriebswelle (100) gebildet ist, wobei die Messerswelle (101) ein Ritzel (107) trägt, das mit einem innenverzahnten Hohlzylinder (108) in Eingriff steht, der mit dem torsionselastischen Dämpfungsglied (103) verbunden ist.

3. Aufsitzrasenmäher nach Anspruch 1 oder 2,
dadurch gekennzeichnet, daß die zweite Kupplungseinrichtung (109) durch einen Riemen (114), der über eine erste an der Motorabtriebswelle (100) befestigte Riemenscheibe (110) und eine zweite an einer mit dem Getriebe in Verbindung stehenden und parallel zur Motorabtriebswelle (100) angeordneten Welle (113) befestigte Riemenscheibe (111) läuft gebildet ist, wobei die kraftschlüssige Verbindung der beiden Riemescheiben (110,111) durch die Betätigung eines Elementes (115) erzeugt wird, über das der Riemen (114) gespannt wird, während dieser über die erste Riemenscheibe (110) rutscht, wenn das Element (115) nicht betätigt ist.

4. Aufsitzrasenmäher nach einem der vorhergehenden Ansprüche,
dadurch gekennzeichnet, daß auf beiden Seiten des Aufbaus Fußrasten oder Fußplatten vorgesehen sind, die zumindest mit dem Element (115) kombiniert sind, wenn dieses vorhanden ist.

5. Aufsitzrasenmäher nach einem der vorhergehenden Ansprüche,
dadurch gekennzeichnet, daß der Rahmenaufbau und/oder der Antriebsmotor (16) durch eine Karosserie verkleidet ist.

6. Aufsitzrasenmäher nach einem der vorhergehenden Ansprüche,
dadurch gekennzeichnet, daß der Vorderteil mit der Lenkanordnung eine Verkleidung (28) mit einem dem Fahrer zugewandten Armaturenbrett (30) trägt.

7. Aufsitzrasenmäher nach einem der vorhergehenden Ansprüche,
dadurch gekennzeichnet, daß der Sattel (14) als Sitz mit oder ohne Lehne ausgebildet ist.

8. Aufsitzrasenmäher nach einem der vorhergehenden Ansprüche,
dadurch gekennzeichnet, daß der Sattel (14) um eine Achse (20) nach oben aufklappbar ist.

9. Aufsitzrasenmäher nach einem der vorhergehenden Ansprüche,
dadurch gekennzeichnet, daß der Rahmenaufbau zwei abgeknickte Profilträgerpaare (46,54) aufweist, die im geringen Abstand zueinander benachbart zur Längsachse angeordnet und miteinander und mit Versteifungsmitteln (52, 56, 48) verschweißt sind.

10. Aufsitzrasenmäher nach Anspruch 9,
dadurch gekennzeichnet, daß im hintere Abschnitt der abgeknickten Profilträgerpaare (46,54) ein quer verlaufender, vertikal stehender Bügel (44) angeschweißt ist.

11. Aufsitzrasenmäher nach Anspruch 9,
dadurch gekennzeichnet, daß mit den Profilträgerpaaren (46,54) ein Heckrahmen (58) verschweißt ist.

12. Aufsitzrasenmäher nach den Ansprüchen 9 und 10,
dadurch gekennzeichnet, daß an den geknickten Profilträgerpaaren (46,54) ein horizontaler U-Rahmen angeschweißt ist.

13. Aufsitzrasenmäher nach Anspruch 9,
dadurch gekennzeichnet, daß die Profilträgerpaare (46,54) im Vorderteil mit dem Lenkgehäuse (50) verbunden sind.

## Claims

1. Ride-on lawnmower having a driving motor (16) for the cutting blades and propulsion, having a motor output shaft (100), a cutter shaft (101), a seat (14) beneath which the driving motor (16) is arranged, a chassis incorporating two rear wheels (10) driven by the driving motor (16) and two steerable front wheels (12) between which the cut swathe will be situated, and having a frame structure whose front portion is joined to a steering box (50) in which is mounted a steering column which projects down into the latter,
characterised in that the seat is constructed in the form of a saddle (14), with the driver's legs enclosing driving elements between them, that the frame structure is a central frame structure on which the chassis, a steering mechanism and the drive unit (16) are suspended, with the saddle (14) being supported on the frame structure, that the longitudinal axes of the motor output shaft (100) and the cutter shaft (101) are axially aligned and vertically arranged, that the motor output shaft (100) and the cutter shaft are adapted to be joined via a first coupling device (102) and a torsionally elastic damping member, that the torsionally elastic damping member is disposed between the first coupling device (102) and the cutter shaft (101), with the output member of the first coupling device (102) engaging in the external circumferential zone of the damping member, while the cutter shaft engages in the inner zone of the damping member in such a manner that shocks or jolts either to the blades or to the motor are elastically compensated, that the two rear wheels (10) are adapted to be connected to the motor output shaft (100) via a second coupling mechanism (109), a gearbox (104) and/or a belt or chain assembly (105), and that the steering column is joined to a handlebar (106) which carries on it controls.

2. Ride-on lawnmower according to claim 1,
characterised in that the cutter shaft encloses a cutting height adjustment means which is constituted by the axial displaceability of the cutter shaft (101) relative to the motor output shaft (100), the cutter shaft (101) carrying a pinion (107) which is in engagement with a hollow cylinder (108) having internal teeth, which is connected to the torsionally elastic damping member (103).

3. Ride-on lawnmower according to claim 1 or 2,
characterised in that the second coupling device (109) is constituted by a belt (114) which runs via a first pulley (110) attached to the motor output shaft (100) and a second pulley (111) attached to a shaft (113) communicating with the gearbox and arranged parallel to the motor output shaft (100), the non-positive connection between the two pulleys (110, 111) being produced by the actuation of an element (115) via which the belt (114) is tensioned, whereas the latter slips over the first pulley (110) whenever the element (115) is not actuated.

4. Ride-on lawnmower according to any of the preceding claims,
characterised in that on both sides of the structure there are provided foot rests or foot plates which are combined at least with the element (115), where the latter is provided.

5. Ride-on lawnmower according to any of the preceding claims,
characterised in that the frame structure and/or the driving motor (16) is disguised by a body.

6. Ride-on lawnmower according to any of the preceding claims,
characterised in that the front part with the steering arrangement carries a cover (28) with an instrument panel (30) facing towards the driver.

7. Ride-on lawnmower according to any of the preceding claims,
characterised in that the saddle (14) is in the form of a seat with or without a back rest.

8. Ride-on lawnmower according to any of the preceding claims,
characterised in that the saddle (14) is adapted to be folded up about an axis (20).

9. Ride-on lawnmower according to any of the preceding claims,
characterised in that the frame structure incorporates two bent-angled pairs of profiled beams (46, 54) which are arranged a short distance from one another adjacent to the longitudinal axis and are welded to one another and to stiffening means (52, 56, 48).

10. Ride-on lawnmower according to claim 9,
characterised in that welded on in the rear section of the bent-angled pairs of profiled beams (46, 54) is a transverse, vertically upright C-frame (44).

11. Ride-on lawnmower according to claim 9,
characterised in that a rear frame (58) is welded to the pairs of profiled beams (46, 54).

12. Ride-on lawnmower according to claims 9 and 10,
characterised in that a horizontal U-shaped frame is welded onto the bent-angled pairs of profiled beams (46, 54).

13. Ride-on lawnmower according to claim 9,
characterised in that the pairs of profiled beams (46, 54) are joined to the steering box (50) in the front part.

## Revendications

1. Tondeuse à gazon autoportée comprenant un moteur d'entraînement (16) pour les lames de coupe et la propulsion, un arbre de sortie (100) de moteur, un arbre porte-lames (101), un siège (14) en dessous duquel est disposé le moteur d'entraînement (16), un châssis comprenant deux roues arrière (10) entraînées par le moteur d'entraînement (16) et deux roues avant (12) orientables entre lesquelles vient se situer la bande de gazon à tondre, et une structure-cadre dont la partie avant est reliée à un boîtier de direction (50) dans lequel pénètre et est montée une colonne de direction, caractérisée par le fait que le siège est réalisé sous la forme d'une selle (14), les jambes du conducteur recevant entre elles des éléments d'entraînement, que la structure-cadre est une structure-cadre centrale à laquelle sont suspendus le châssis, un dispositif de direction et le moteur d'entraînement (16), la selle (14) prenant appui sur la structure-cadre, que les axes de l'arbre de sortie (100) du moteur et de l'arbre porte-lames (101) sont alignés et disposés verticalement, que l'arbre de sortie (100) du moteur et l'arbre porte-lames peuvent être reliés en passant par un premier dispositif d'embrayage (102) et un élément amortisseur élastique en torsion, que l'élément amortisseur élastique en torsion est disposé entre le premier dispositif d'embrayage (102) et l'arbre porte-lames (101), l'élément mené du premier dispositif d'embrayage (102) coopérant avec la zone périphérique extérieure de l'élément amortisseur, tandis que l'arbre porte-lames coopère avec la zone intérieure de l'élément amortisseur de telle manière que des chocs et impulsions tant côté lames que côté moteur soient élastiquement compensés, que les deux roues arrière (10) peuvent être reliées à l'arbre de sortie (100) du moteur en passant par un deuxième dispositif d'embrayage (109), une boîte de vitesses (104) et/ou une transmission à courroie ou à chaîne (105), et que la colonne de direction est reliée à un guidon (106) portant des éléments de commande.

2. Tondeuse à gazon autoportée suivant la revendication 1, caractérisée par le fait que l'arbre porte-lames comprend un réglage de la hauteur de coupe réalisé par la mobilité en translation axiale de l'arbre porte-lames (101) par rapport à l'arbre de sortie (100) du moteur, l'arbre porte-lames (101) portant un pignon (107) qui se trouve en prise avec un cylindre creux (108) à denture intérieure, relié à l'élément amortisseur (103) élastique en torsion.

3. Tondeuse à gazon autoportée suivant la revendication 1 ou 2, caractérisée par le fait que le deuxième dispositif d'embrayage (109) est constitué par une courroie (114) qui passe sur une première poulie (110) fixée à l'arbre de sortie (100) du moteur et sur une deuxième poulie (111) fixée sur un arbre (113) qui se trouve en liaison avec la boîte de vitesses et est disposé parallèlement à l'arbre de sortie (100) du moteur, la liaison d'entraînement des deux poulies (110, 111) étant établie par actionnement d'un élément (115) par lequel la courroie (114) est tendue, tandis que cette dernière glisse sur la première poulie (110) lorsque ledit élément (115) n'est pas actionné.

4. Tondeuse à gazon autoportée suivant l'une des revendications précédentes, caractérisée par le fait que des repose-pieds combinés au moins avec l'élément (115) lorsque ce dernier existe sont prévus sur les deux côtés de la structure.

5. Tondeuse à gazon autoportée suivant l'une des revendications précédentes, caractérisée par le fait que la structure-cadre et/ou le moteur d'entraînement (16) sont/est entouré(s) d'une carrosserie.

6. Tondeuse à gazon autoportée suivant l'une des revendications précédentes, caractérisée par le fait que la partie avant comprenant le dispositif de direction porte un carénage (28) avec un tableau de bord (30) tourné vers le conducteur.

7. Tondeuse à gazon autoportée suivant l'une des revendications précédentes, caractérisée par le fait que la selle (14) est réalisée sous forme de siège avec ou sans dossier.

8. Tondeuse à gazon autoportée suivant l'une des revendications précédentes, caractérisée par le fait que la selle (14) peut être rabattue vers le haut autour d'un axe (20).

9. Tondeuse à gazon autoportée suivant l'une des revendications précédentes, caractérisée par le fait que la structure-cadre présente deux paires de profilés coudés qui sont disposées à faible distance l'une de l'autre au voisinage de l'axe longitudinal et sont soudées entre elles et à des moyens de rigidification (52, 56, 58).

10. Tondeuse à gazon autoportée suivant la revendication 9, caractérisée par le fait qu'un arceau (44) transversal, disposé verticalement, est soudé dans le tronçon arrière des paires de profilés coudés (46, 54).

11. Tondeuse à gazon autoportée suivant la revendication 9, caractérisée par le fait qu'un cadre arrière (58) est soudé aux paires de profilés (46, 54).

12. Tondeuse à gazon autoportée suivant les revendications 9 et 10, caractérisée par le fait qu'un cadre en U horizontal est soudé aux paires de profilés coudés (46, 54).

13. Tondeuse à gazon autoportée suivant la revendication 9, caractérisée par le fait que les paires de profilés (46, 54) sont reliées au boîtier de direction (50) dans la partie avant.
